(19) Europäisches Patentamt
European Patent Office
Office européen des brevets

(11) Veröffentlichungsnummer: **0 275 545**
**A1**

(12) # EUROPÄISCHE PATENTANMELDUNG

(21) Anmeldenummer: **87119220.9**

(22) Anmeldetag: **24.12.87**

(51) Int. Cl.⁴: **C08G 65/48**, C08L 71/04, C08G 79/04

(30) Priorität: **07.01.87 DE 3700208**

(43) Veröffentlichungstag der Anmeldung: **27.07.88 Patentblatt 88/30**

(84) Benannte Vertragsstaaten: **DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Fuhr, Karl, Dr.**
**Krüllsdyk 55**
**D-4150 Krefeld(DE)**
Erfinder: **Müller, Friedemann, Dr.**
**Am Steinacker 5**
**D-4040 Neuss 21(DE)**
Erfinder: **Ott, Karl-Heinz, Dr.**
**Paul-Klee-Strasse 54**
**D-5090 Leverkusen(DE)**

(54) **Phosphorhaltige Oligomere und Polymere mit Polyphenylenether-blöcken sowie Mischungen anderer Kunststoffe mit ihnen.**

(57) Die Erfindung betrifft oligomere und polymere Ester aus difunktionellen Polyphenylenethern und Phosphinsäuren, Phosphonsäuren und Phosphorsäure und ihre Verwendung als flammhemmende Mischkomponente für andere Kunststoffe.

EP 0 275 545 A1

Xerox Copy Centre

## Phosphorhaltige Oligomere und Polymere mit Polyphenylenetherblöcken sowie Mischungen anderer Kunststoffe mit ihnen

Die Erfindung betrifft oligomere und polymere Ester aus difunktionellen Polyphenylenethern und Phosphinsäuren, Phosphonsäuren und Phosphorsäure und ihre Verwendung als flammhemmende Mischkomponente für andere Kunststoffe.

Mischungen aus monofunktionellen Polyphenylenethern mit anderen Kunststoffen und Estern der Phosphorsäure mit niedrigem Molekulargewicht und Halogenverbindungen sind bekannt. Sie zeichnen sich durch Verträglichkeit und durch Schwerbrennbarkeit aus (US-PS 3 639 506). Der Nachteil besteht darin, daß die Wärmeformbeständigkeit herabgesetzt ist und Migration von Mischungsbestandteilen auftreten kann.

Difunktionelle Polyphenylenether und ihre Umsetzungsproduckte mit Phosgen, Terephthaloylchlorid bzw. Diisocyanaten (DE-OS 3 300 792, 3 308 421) und mit di-und trifunktionellen Phosphorverbindungen (DE-OS 2 823 167) sind bekannt. Ohne Phosphor haben die Materialien eine gute Wärmeformbeständigkeit, sie sind aber leicht entzünd-und brennbar. Der Nachteil der bekannten difunktionellen Polyphenylenether besteht darin, daß sie aus monofunktionellen Polyphenylenethern durch Verknüpfung mit Aldehyden bzw. Ketonen (DE-OS 3 300 792) bzw. Chinonen (DE-OS 2 823 167) hergestellt werden. Beide Verfahren liefern nur difunktionelle Polyphenylenether mit hohen Molekulargewichten. Niedrige Molekulargewichte sind aber wünschenswert, um nach Umsetzung mit Phosphorverbindungen höhere Phosphorgehalte zur erreichen.

Gegenstand der Erfindung sind phosphorhaltige oligomere oder polymere Ester der Formel (I)

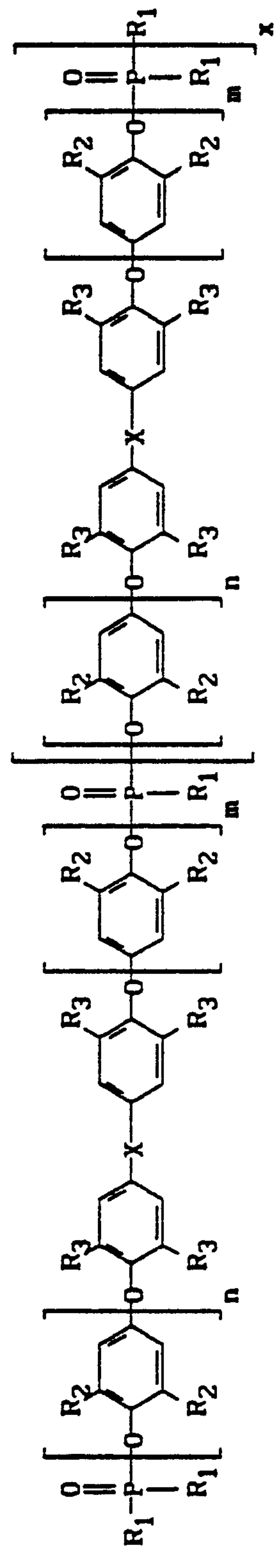

(I),

in welcher, jeweils unabhängig voneinander, die Reste

$R_1$ $C_1$-$C_8$-Alkyl, $C_6$-Aryl, $C_7$-$C_{20}$-Aralkyl, $C_1$-$C_8$-Alkoxy, $C_6$-Aryloxy, wobei Aryl auch mit $C_1$-$C_4$-Alkyl oder Halogen (Cl, Br) substituiert sein kann, bedeuten,

$R_2$ $C_1$-$C_4$-Alkyl, $C_6$-Aryl, Halogen wie Cl, Br, bedeutet, wobei pro Phenylring ein $CH_3$ zugegen sein muß,

$R_3$ Wasserstoff, $C_1$-$C_4$-Alkyl, $C_6$-Aryl, Halogen wie Cl, Br, bedeuten, wobei pro Phenylring ein $CH_3$ zugegen sein muß,

X 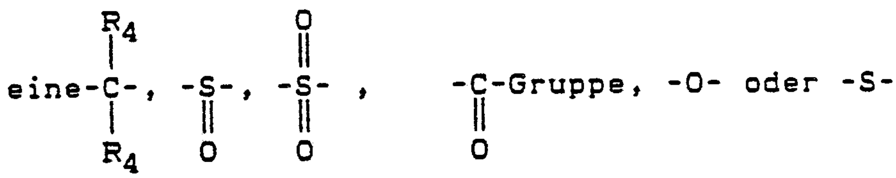

bedeutet und

$R_4$ unabhängig voneinander Wasserstoff und $C_1$-$C_4$-Alkyl bedeuten, wobei diese auch zusammen mit dem C-Atom, an das sie gebunden sind, einen 3 bis 6 C-Atome enthaltenden Ring bilden können,

n und m unabhängig voneinander für die Zahlen 0, 1, 2, 3, 4, 5, 6 und 7 stehen, mit der Maßgabe, daß n und m nicht gleichzeitig für die Zahl 0 stehen können und die Summe (n + m) größer als die Zahl 8 ist und

x für eine ganze Zahl von 1 bis 50, vorzugsweise 1 bis 30, besonders bevorzugt 3 bis 10 steht.

Die erfindungsgemäßen oligomeren oder polymeren Ester werden durch Umsetzung von Dichloriden der Phosphonsäuren oder des Phosphorsäuremonophenylesters mit Polyphenylenethern erhalten. Zur Regelung des Molekulargewichts können z.B. Chloride der Phosphinsäuren oder Monochloride der Phenylester von Phosphonsäuren bzw. Phosphorsäure eingesetzt werden.

Die bei der Herstellung der erfindungsgemäßen Verbindungen eingesetzten difunktionellen Polyphenylenether der Formel (II)

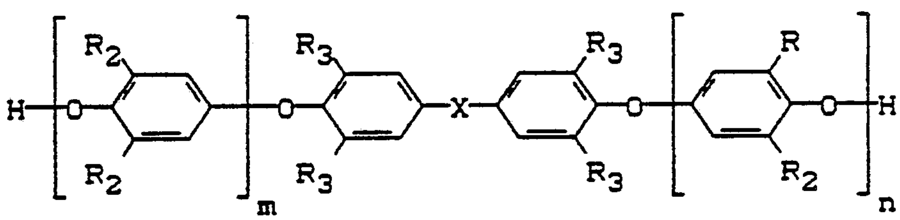

(II),

in welcher $R^2$, $R^3$, X, n und m die bei Formel (I) angegebene Bedeutung haben,
werden nach dem in der DE-OS 3 308 421 beschriebenen Verfahren hergestellt: Gemische von Phenolen der Formel (III)

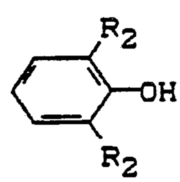

(III),

in welcher $R_2$ die bei Formel (I) angegebene Bedeutung hat, z.B, 2,6-Dimethylphenol, und Bisphenole der Formel (IV)

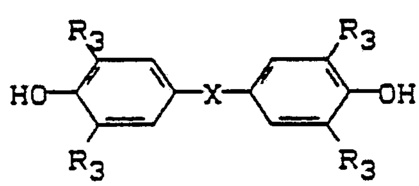

(IV),

in welcher $R_3$ und X die bei Formel (I) angegebene Bedeutung haben, z.B. 2,2-Bis-(3,5-dimethyl-4-hydroxyphenyl)-propan, werden in einem organischen Lösungsmittel (z.B. Chloroform) in Gegenwart eines Katalysators (z.B. Kupferchlorid/4-Dimethylaminopyridin) bei -80 bis 100°C gegebenenfalls unter erhöhtem Druck mit Sauerstoff umgesetzt.

Bei der Herstellung der difunktionellen Polyphenylenether nach diesem Verfahren kann das Molekulargewicht durch das Mischungsverhältnis von Monophenol zu Bisphenol in weitem Bereich variiert werden, also auch niedrig sein. Sie können Molekulargewichte von unter 1.500 haben. Nach Umsetzung mit Phosphorverbindungen sind so Phosphorgehalte von 7 bis 8 Gew.-% erreichbar. Die erfindungsgemäßen Verbindungen erniedrigen in Abmischung mit anderen Kunststoffen nicht die Verträglichkeit und Wärmeformbeständigkeit. Sie ermöglichen eine deutlich herabgesetzte Entflamm-und Brennbarkeit. Migrationen von Mischungsbestandteilen treten nicht auf.

Die erfindungsgemäßen Polyester können nach folgenden Verfahren erhalten werden:

1. Durch Umsetzung der difunktionellen Polyphenylenether mit Säurechloriden des Phosphors bei Temperaturen von 120-170°C unter Abspaltung von Chlorwasserstoff, gegebenenfalls in organischen Lösungsmitteln, z.B. Tetrachlorethylen.

2. Durch Umsetzung der difunktionellen Polyphenylenether-Salze (Phenolate) mit Säurechloriden nach dem Verfahren der Grenzflächenkondensation bei Temperaturen von -10 bis 0°C, z.B. im System Wasser/Methyllenchlorid (Katalysator z.B. Cetyltrimethylammoniumchlorid).

3. Durch Umsetzung der difunktionellen Polyphenylenether mit Phenylestern der oben angegebenen Säuren des Phosphors bei Temperaturen von 200 bis 300°C bei einem Druck von 0,01 bis 0,1 bar unter Abspaltung von Phenolen in Gegenwart eines Katalysators, z.B. Zinnoctoat.

Als Monophenole können z.B. 2,6-Dimethylphenol, 2-Methyl-6-ethylphenol, 2-Methyl-6-isopropylphenol, 2-Methyl-6-phenylphenol, 2-Methyl-6-methoxyphenol, 2,6-Diethylphenol, 2,6-Dichlorphenol und 2,6-Dibromphenol sowie als Bisphenole z.B. 2,2-Bis-(4-hydroxyphenyl)-propan, 2,2-Bis-(3,5-dimethyl-4-hydroxyphenyl)-propan, 2,2-Bis-(4-hydroxyphenyl)-methan, Bis-(3,5-dimethyl-4-hydroxyphenyl)-methan, Bis-(4-hydroxyphenyl)-ether, Bis-(4-hydroxyphenyl)-sulfid, Bis-(4-hydroxyphenyl)-sulfon, 4,4-Dihydroxybenzophenon verwendet werden. Die Herstellung der difunktionellen Polyphenylenether ist bekannt (DE-OS 3 308 421).

Beispiele für erfindungsgemäß zu verwendende Phosphorverbindungen sind die Chloride und Phenylester von z.B. Dimethylphosphinsäure, Methylethylphosphinsäure, Methylphenylphosphinsäure, Diphenylphosphinsäure, Methylphosphonsäure, Phenylphosphonsäure, Benzylphosphonsäure und Phosphorsäure.

Ein weiterer Gegenstand der Erfindung ist die Verwendung der oligomeren bzw. polymeren Ester von Säuren des Phosphors mit difunktionellen Polyphenylenethern als flammhemmender Zusatz in Kunststoffen. Sie können gegebenen falls zusammen mit anderen üblichen flammhemmenden halogenhaltigen Verbindungen und gegebenenfalls einem weiteren Zusatz als Synergisten in einer Menge von 5 bis 65 Gew.%, bezogen auf die gesamte Mischung, eingesetzt werden.

Ein weiterer Gegenstand der Erfindung sind Massen, die einen Kunststoff, einen erfindungsgemäßen phosphorhaltigen Ester von einem difunktionellen Polyphenylenether in einer Menge von 5 bis 65 Gew.-%, bezogen auf das Gesamtgemisch, sowie gegebenenfalls eine halogenhaltige Verbindung und gegebenenfalls weitere Zusätze, z.B. Metalloxide, enthalten.

Als Kunststoffe sind besonders geeignet Thermoplasten wie Polystyrol, Co-und Pfropfpolymerisate mit Styrol, z.B. Styrol/Acrylnitril-Copolymerisate, hochschlagfestes Polystyrol, Pfropfpolymerisate von Styrol, Acrylnitril und Kautschuken (vom ABS-Typ), Polyethylen, Polypropylen, Polyvinylchlorid, Polyacrylat, Polyester, aromatisches Polycarbonat, Polyamid, Polyurethan, Polysulfon, Polyphenylenoxid, Polyphenylensulfid oder Mischungen dieser Kunststoffe, duroplastische Kunststoffe, z.B. aus ungesättigten Polyesterharzen, Epoxidharzen und vernetzbaren Polyurethanrohstoffen.

Die Massen können neben den erfindungsgemäßen oligomeren oder polymeren Estern der Formel (I) weitere Flammschutzmittel und gegebenenfalls Zusätze wie Fällstoffe, Pigmente und Verstärkungsmittel, z.B. Glasfasern enthal ten, sowie übliche Hilfsstoffe, z.B. Hitzestabilisatoren, Lichtschutzmittel, Antioxidantien, Gleit-und Schmierstoffe, Entformungsmittel und Farbstoffe.

Beispiele für Flammschutzmittel sind z.B. halogenhaltige Flammschutzmittel wie Hexabrombenzol, Pentabromtoluol, Octa-und Decabromdiphenyl, Octa-und Decabromdiphenylether, Hexabrom-bis-phenoxyethan, Ethylen-bis-tetrabromphthalimid und deren Gemische sowie Antidrippingmittel, z.B. Polytetrafluorethylen.

Als weitere hochwirksame Flammschutzmittel können synergistisch wirkende Metalloxide z.B. Antimon-(III)-oxid,, Blei(IV)-oxid, Cer(IV)oxid, Kupfer(II)-oxid, Molybdän(VI)-oxid, Vanadium(V)-oxid, Wismut(III)-oxid, Wolfram(VI)-oxid, Zinn(IV)-oxid und Zirkon(IV)-oxid, sowie deren Mischungen zugesetzt werden.

Beispiele für typische Füllstoffe und Pigmente sind Glaskugeln, Quarzmehl, Kalk, Kreide, Leicht-und

Schwerspat, Aluminiumhydroxid, Aluminiumoxid, Magnesium-und Aluminiumsilikate wie Glimmer, Talkum oder Kaolin, Aluminiumphosphat, Calciumphosphat, Zinkborat, Zinkoxid, Eisenoxid, Titandioxid, Kohlenstoff. z.B. als Graphit oder Ruß, sowie faserförmige Stoffe, z.B. Glasfasern.

Beispiel 1

151,1 g difunktioneller Polyphenylenether (OH-Zahl 129, MG 870, 0,174 Mol) werden in 300 ml Tetrachlorethylen gelöst, die Lösung wird auf Rückflußtemperatur (125°C) erhitzt. Innerhalb von 1,5 Stunden werden 50 g Ethylmethylphosphinsäurechlorid (0,395 Mol) zugetropft. Nach 35 Stunden ist die Umsetzung beendet.

Nach Abkühlen wird das Reaktionsgemisch mehrmals mit Wasser chloridfrei gewaschen, nach Trocknen mit Natriumsulfat die Lösung eingeengt und der erhaltene Feststoff 2 Tage im Vakuum bei 80°C getrocknet. Die Ausbeute beträgt 179,4 g oder 98,3 % der Theorie. Das Produkt schmilzt um 128°C (Erweichung ab 122°C). Der Phosphorgehalt beträgt 5,6 Gew.-% (theoretisch 5,9 Gew.-%).

Zur Prüfung auf die Flammschutzwirkung des zuvor beschriebenen Präparats werden 169.0 g zusammen mit 234.0 g Octabromdiphenylether in 897,0 g eines typischen ABS-Copolymerisats (Novodur PX® der Bayer AG) auf einem Kneter bei 200 bis 220°C gemischt. Aus dem erhaltenen Material werden dann für den UL-Test geeignete Prüfkörper von 2,5 mm Dicke hergestellt. Er erhält neben 14.4 % Brom 0,7 % Phosphor. Der UL-Test ergibt das Prüfergebnis V-O.

Beispiel 2

168,7 g difunktioneller Polyphenylenether (OH-Zahl 131, MG 844, 0,20 Mol) werden in 300 ml Perchlorethylen gelöst, die Lösung wird auf Rückflußtemperature (125°C) erhitzt. Innerhalb von 1,5 Stunden werden 28,7 g Phenylphosphonsäurechlorid (0,15 Mol) und 18,6 g Methylethylphosphinsäurechlorid (0,15 Mol) zugetropft. Nach 40 Stunden is die Abspaltung von Chlorwasserstoff und damit die Reaktion beendet.

Nach Abkühlen wird das Reaktionsgemisch mehrmals mit Wasser chloridfrei gewaschen, nach Trocknen mit Natriumsulfat die Lösung eingeengt und der erhaltene Feststoff im Vakuumtrockenschrank getrocknet. Die Ausbeute beträgt 196,5 g oder 99,7 % der Theorie. Das Produkt schmilzt um 140°C. Der Phosphorgehalt beträgt 4,4 Gew.-% (theoretisch 4.6 Gew.-%).

Zur Prüfung auf die Flammschutzwirkung des zuvor beschriebenen Präparats werden 195, 0 g zusammen mit 234,0 g Octabromdiphenylether in 871,0 g eines typischen ABS-Copolymerisats (Novodur PX® der Bayer AG) auf einen Kneter bei 200 bis 220°C gemischt. Von dem erhaltenen Material werden dann für den UL-Test geeignete Prüfkörper von 2,5 mm Dicke hergestellt. Er enthält neben 14,4 % Brom 0,7 % Phosphor. Der UL-Test ergibt das Prüfergebnis V-O.

## Ansprüche

1. Oligo-bis polymere Ester der Formel I

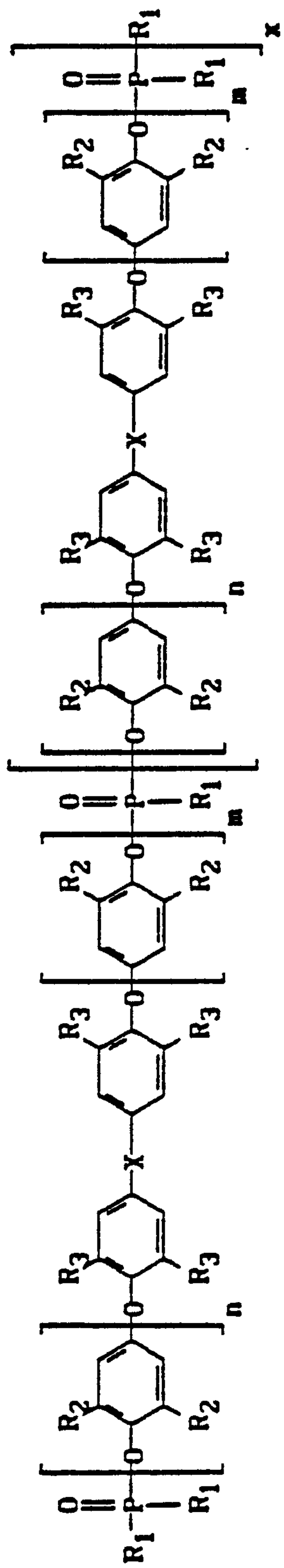

(I),

in welcher, jeweils unabhängig voneinander, die Reste

$R_1$ $C_1$-$C_8$-Alkyl, $C_6$-Aryl, $C_7$-$C_{20}$-Aralkyl, $C_1$-$C_8$-Alkoxy, $C_6$-Aryloxy, wobei Aryl auch mit $C_1$-$C_4$-Alkyl oder Halogen (Cl, Br) substituiert sein kann, bedeuten,

$R_2$ $C_1$-$C_4$-Alkyl, $C_6$-Aryl, Halogen wie Cl, Br, bedeutet, wobei pro Phenylring ein $CH_3$ zugegen sein muß,

$R_3$ Wasserstoff, $C_1$-$C_4$-Alkyl, $C_6$-Aryl, Halogen wie Cl, Br, bedeuten, wobei pro Phenylring ein $CH_3$ zugegen sein muß,

X eine 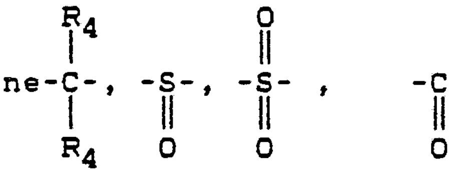 -Gruppe,

-O-oder -S-bedeutet und

$R_4$ unabhängig voneinander Wasserstoff und $C_1$-$C_4$-Alkyl bedeuten, wobei diese auch zusammen mit dem C-Atom, an das sie gebunden sind, einen 3 bis 6 C-Atome enthaltenden Ring bilden können,

n und m unabhängig voneinander für die Zahlen 0, 1, 2, 3, 4, 5, 6, und 7 stehen, mit der Maßgabe, daß n und m nicht gleichzeitig für die Zahl O stehen können und die Summe (n + m) nicht größer als die Zahl 8 ist

und

x für eine ganze Zahl von 1 bis 50, vorzugsweise 1 bis 30, besonders bevorzugt 3 bis 10 steht.

2. Oligomere und polymere Ester nach Anspruch 1, dadurch gekennzeichnet, daß der verwendete difunktionelle Polyphenylenether aus 2,2-Bis-(3,5-dimethyl-4-hydroxyphenyl)-propan und 2,6-Dimethylphenol hergestellt wird.

3. Oligomere und polymere Ester nach Anspruch 1, dadurch gekennzeichnet, daß für die Säurekomponente Methylphosphonsäuredichlorid allein oder in Mischung mit Methylethylphosphinsäurechlorid oder ihre Umsetzungsprodukte mit Phenol verwendet werden.

4. Oligomere und polymere Ester nach Anspruch 1, dadurch gekennzeichnet, daß für die Säurekomponente Phenylphosphonsäuredichlorid allein oder in Mischung mit Methylethylphosphinsäurechlorid oder ihre Umsetzungsprodukte mit Phenol verwendet werden.

5. Oligomere und polymere Ester nach Anspruch 1, dadurch gekennzeichnet, daß für die Säurekomponente Phosphoroxychlorid oder deren Umsetzungsprodukt mit Phenol verwendet werden.

6. Oligomere und polymere Ester nach Anspruch 1, dadurch gekennzeichnet, daß für die Säurekomponente Methylethylphosphinsäurechlorid oder Methylethylphosphinsäurephenylester verwendet wird.

7. Verwendung von oligo-bis polymeren Estern nach Anspruch 1 als Flammschutzmittel für Kunststoffe in Mengen von 5 bis 65 Gewichtprozent.

8. Verwendung von oligo-bis polymeren Estern nach Anspruch 1 als Flammschutzmittel für Kunststoffe dadurch gekennzeichnet, daß synergistisch wirkende Metalloxide, weitere organische Phosphorverbindungen, bromhaltige Verbindungen und/oder Füllstoffe mitverwendet werden.

Europäisches Patentamt

# EUROPÄISCHER RECHERCHENBERICHT

Nummer der Anmeldung

EP 87 11 9220

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-2 823 167 (GENERAL ELECTRIC CO.)<br>* Ansprüche 1,2; Seite 6, Abschnitt 2 - Seite 8, letzte Zeile; Seite 21, letzter Abschnitt *<br>--- | 1-5,7,8 | C 08 G 65/48<br>C 08 L 71/04<br>C 08 G 79/04 |
| D,Y | DE-A-3 308 421 (BAYER AG)<br>* Ansprüche; Seite 7, Zeilen 14-22 *<br>--- | 1-5,7,8 | |
| A | FR-A-2 392 059 (GENERAL ELECTRIC CO.)<br>* Ansprüche 1,2 *<br>----- | 1-5,7,8 | |
| | | | **RECHERCHIERTE SACHGEBIETE (Int. Cl.4)** |
| | | | C 08 G<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 30-03-1988 | VOIGTLAENDER R.O.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)